# EUROPÄISCHE PATENTSCHRIFT

(11) **EP 0 964 604 B1**
(45) Veröffentlichungstag und Bekanntmachung des Hinweises auf die Patenterteilung: **02.09.2009**
(21) Anmeldenummer: 99110598.2
(22) Anmeldetag: 02.06.1999
(51) Int. Cl.: H05B 6/02

(54) **Vorrichtung zum Beheizen eines Kraftfahrzeugs**
Heating device for vehicles
Dispositif de chauffage dans un véhicule

(30) Priorität: 08.06.1998 DE 19825495; 25.05.1999 DE 19923878
(43) Veröffentlichungstag der Anmeldung: 15.12.1999
(73) Patentinhaber: GKR Gesellschaft für Fahrzeugklimaregelung mbH, 71701 Schwieberdingen (DE)
(72) Erfinder: Breitling, Wolfram, 74343 Sachsenheim (DE)
(74) Vertreter: Kisselmann, Rudi

(56) Entgegenhaltungen:
- US-A- 2 549 362
- US-A- 2 912 552
- US-A- 3 764 767
- US-A- 4 761 527
- US-A- 5 746 580
- US-A- 5 773 798

## Beschreibung

### Stand der Technik

Die Erfindung geht aus von einer Vorrichtung zum Beheizen eines Kraftfahrzeugs nach der Gattung des unabhängigen Anspruchs.

Aus der DE-A 44 29 386 ist bereits eine Wirbelstromheizung mit Windenergie bekannt. Die Windenergie wird zur Erzeugung von Wirbelströmen genutzt. Die entstehende Wärme wird über ein Wärmetauschermedium zu Heizzwecken abgeführt.

Aus der US-A-2 549 362 ist weiterhin eine Heizvorrichtung für ein Kraftfahrzeug, mit einem Heizlüfter, der Luft in einen zu beheizenden Raum befördert, bekannt, wobei zumindest ein Teil eines Rotors des Heizlüfters aus einem magnetischen Material besteht und Elektromagnete zur Erzeugung eines Magnetfeldes um die Bewegungsrichtung des Rotors derart angeordnet sind, dass im Falle einer Rotation des Rotors Wirbelströme erzeugt werden, die zu einer Erhitzung des Rotors und damit der den Heizlüfter durchströmenden Luft führen.

### Vorteile der Erfindung

Die erfindungsgemäße Vorrichtung zum Beheizen eines Kraftfahrzeugs weist ein von einem Antrieb über eine Achse bewegbares Teil auf. Ein Elektromagnet ist in der Nähe des bewegbaren Teils in der Weise angeordnet, dass eine Relativbewegung des bewegbaren Teils gegenüber dem Elektromagneten zu einer Induzierung eines Wirbelstroms in dem Teil führt und die dabei entstehende Wärme von einem Wärmeträger abgeführt und einer zu beheizenden Einheit des Kraftfahrzeugs zugeführt ist, wobei das bewegbare Teil scheibenförmig ausgebildet ist. Die erfindungsgemäße Vorrichtung zeichnet sich dadurch aus, dass eine Regelung für das Magnetfeld des Elektromagneten vorgesehen ist und die Regelung des Elektromagneten von der Drehzahl des bewegbaren Teils und von einem Temperatursollwert sowie von einem Temperaturistwert des Wärmeträgers abhängt. Der Einsatz eines Elektromagneten bietet den Vorteil, dass dank des niedrigen Energieeinsatzes eine vereinfachte Regelbarkeit erzielt werden kann. Als Magnetfeld wird vorzugsweise ein Wechselfeld verwendet. Die für die Regelung berücksichtigte Solltemperatur des Wärmeträgers kann auf die Beheizung des Fahrgastraumes oder des Antriebs abgestellt sein. Auch abgasabhängige Größen lassen sich sinnvoll in die Regelung integrieren.

Insbesondere Niedrigverbrauchmotoren geben eine geringe Verlustwärme ab, so daß Betriebssituationen auftreten können, bei denen die Motorabwärme nicht mehr zur Beheizung des Fahrzeuginnenraumes ausreicht. Die vorgeschlagene Vorrichtung zum Beheizen eines Kraftfahrzeugs stellt jedoch zusätzliche Heizleistung zur Beheizung des Fahrzeugs zur Verfügung. Wird als Antrieb der Motorantrieb verwendet, belastet im Gegensatz zu einer elektrischen Zusatzbeheizung die Vorrichtung das Bordnetz nicht. Im Gegensatz zu einer elektrischen Beheizung ist die vorgeschlagene Vorrichtung in der Lage, die für die Beheizung des Fahrzeuginnenraumes notwendige hohe Heizleistung zur Verfügung zu stellen. Die Wirbelstromheizung läßt sich zudem als zusätzliche Abbremsung des Kraftfahrzeugs heranziehen, so daß die herkömmlichen Fahrzeugbremsen geschont werden. Wird das bewegbare Teil direkt im Wasserkreislauf integriert, läßt sich die Heizleistung mit hohem Wirkungsgrad auf den Wärmeträger umsetzen. Während des Zusatzheizbetriebes kann ein günstiger Betriebspunkt des antreibenden Verbrennungsmotors im Leerlauf gewählt werden. Die Heizleistung der erfindungsgemäßen Vorrichtung ist ausreichend zur Wärmeversorgung eines eigenen, getrennten Innenraum-Heizkreislaufs. Wegen der hohen Heizleistung kann der bereits vorhandene Heizwärmetauscher unverändert übernommen werden. Neben der Beheizung des Fahrgastinnenraumes dient die Vorrichtung auch der gezielten Beheizung des Antriebs selbst. Dank der genauen Einstellung der Antriebstemperatur kann der Antrieb in einem aus abgas- oder verbrauchsabhängigen Gesichtspunkten günstigen Arbeitspunkt betrieben werden.

In einer zweckmäßigen Weiterbildung ist das bewegbare Teil zylinderförmig ausgebildet, wobei in Drehachsrichtung des Zylinders eine Erhöhung vorgesehen ist. Diese Erhöhung in Drehachsrichtung wird von dem Magneten umschlossen. Vorzugsweise sind zwei Magnete so angeordnet, daß sich deren resultierende Kräfte auf das bewegbare Teil aufheben. In einfacher Weise läßt sich dadurch die Stabilität der Anordnung erhöhen, so daß unerwünschtes Blockieren oder Verformen der Scheibe verringert werden kann.

In einer zweckmäßigen Weiterbildung besteht das bewegbare Teil aus nichtmagnetischem, aber besonders gut elektrisch leitendem Material (Kupfer, Bronze).

Eine vorteilhafte Ausgestaltung sieht vor, daß das bewegbare Teil aus einer ersten und einer zweiten Schicht aufgebaut ist. Die erste Schicht besteht aus einem elektrisch leitfähigen Material, das gegenüber dem elektrisch leitfähigen Material der zweiten Schicht einen geringeren elektrischen Widerstand aufweist. Die erste Schicht ist vorzugsweise achsfern angeordnet, so daß die aufgrund des geringeren elektrischen Widerstands höhere Temperatur in diesem Bereich nicht über die Achse abgeführt wird.

Gemäß einer vorteilhaften Weiterbildung sind in dem bewegbaren Teil Durchbrüche vorgesehen, um die Wärmeleitung in Richtung der Achse zu erschweren. Diese konstruktiven Aussparungen können in Verbindung mit feststehend angebrachten Magnetfeldsensoren der Drehzahlermittlung des Teils dienen, da die Aussparungen eine Änderung des Magnetfelds bewirken.

In einer vorteilhaften Ausgestaltung weist das bewegbare Teil Mittel auf, um den Wärmeträger im Wärmekreis umzuwälzen. In der erfindungsgemäßen Vorrichtung kann die herkömmliche Funktion der Wasserpumpe integriert sein. Alternativ ist dann der Antrieb des Teils durch den Wärmeträger selbst möglich, so daß eine aufwendige kraftschlüssige mechanische Kopplung sich erübrigt.

Weitere zweckmäßige Weiterbildungen ergeben sich aus weiteren abhängigen Ansprüchen und aus der Beschreibung.

### Zeichnung

Mehrere Ausführungsbeispiele der Erfindung sind in der Zeichnung dargestellt und werden im folgenden näher beschrieben.

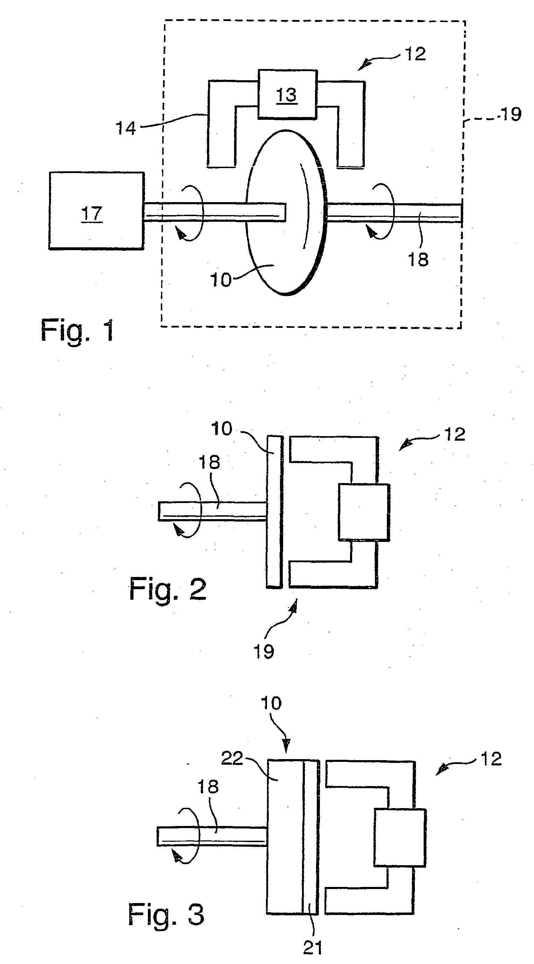

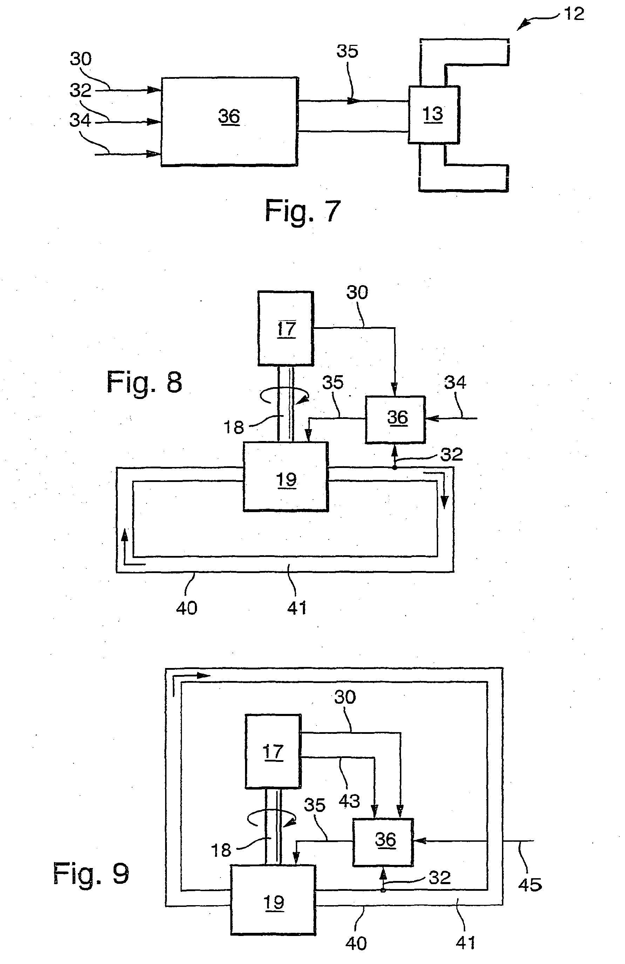

Es zeigen die Fig. 1 bis 6 schematisch mögliche Ausführungsformen einer Wirbelstromheizung, die Fig. 7 bis 9 die Regelung und Einbindung der Wirbelstromheizung für verschiedene Anwendungsfälle.

Beschreibung

Ein scheibenförmig ausgeführtes bewegbares Teil 10 wird über eine Achse 18 von einem Antrieb 17 bewegt. Die Seiten des bewegbaren Teils 10 sind von einem Elektromagneten 12 umschlossen, der aus einem U-förmigen Eisenkern 14 und einer in dessen Mittelteil angeordneten Spule 13 besteht. Elektromagnet 12, bewegbares Teil 10 und die Achse 18 bilden als bauliche Einheit die Wirbelstromheizung 19. Die Schenkelenden des Eisenkerns 14 sind zur Achse 18 hin orientiert. Die im Querschnitt dargestellte Anordnung gemäß Fig. 2 weicht von der nach Fig. 1 in der Weise ab, daß die Schenkelenden des Elektromagneten 12 parallel zur Achse 18 ausgerichtet sind und Wirbelströme in die kreisförmige Oberfläche des Teils 10 induzieren. Die Schenkel sind in der Nähe der Ränder des bewegbaren Teils 10 angeordnet.

Fig. 3 unterscheidet sich von der Fig. 2 nur darin, daß das bewegbare Teil 10 aus einer ersten Schicht 21 und einer zweiten Schicht 22 besteht, wobei die erste Schicht 21 auf der dem Elektromagneten 12 zugewandten Seite des bewegbaren Teils 10 untergebracht ist. Das bewegbare Teil 10 ist wie schon in Fig. 2 im Querschnitt gezeigt.

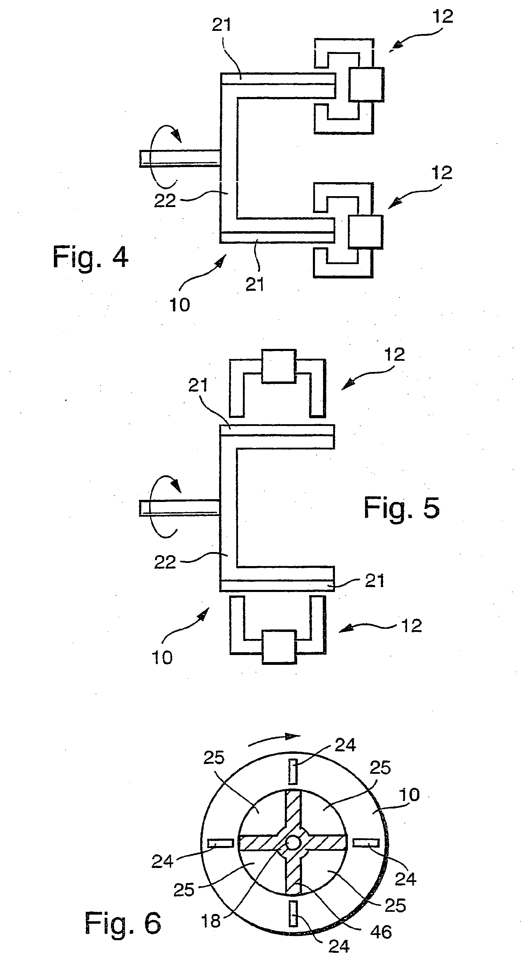

Gemäß dem Ausführungsbeispiel von Fig. 4 ist das bezüglich der Drehachse rotationssymmetrisch aufgebaute bewegbare Teil 10 im Querschnitt dargestellt und U-förmig ausgebildet. Die erste Schicht 21 ist mantelförmig am äußersten Radius des bewegbaren Teils 10 angeformt. Den U-förmigen Kern des bewegbaren Teils 10 bildet die zweite Schicht 22. Oberes und unteres Ende des bewegbaren Teils 10 umschließt jeweils ein Elektromagnet 12.

Das Ausführungsbeispiel gemäß Fig. 5 unterscheidet sich von dem der Fig. 4 darin, daß die Elektromagnete 12 in anderer Weise angeordnet sind. Die beiden Schenkelenden des Elektromagneten 12 sind zu der von der ersten Schicht 21 gebildeten Mantelfläche hin orientiert.

Eine mögliche Ausführungsform des bewegbaren Teils 10 ist in Fig. 6 in der Draufsicht dargestellt. In radialer Nähe zu der Achse 18 sind jeweils vier relativ großflächige zweite Durchbrüche 25 vorgesehen, in Achsferne jeweils vier relativ kleinflächige erste Durchbrüche 24. Weiterhin ist das Material im Bereich der Kreisfläche 46 der Durchbrüche 25 schlecht wärmeleitfähig, wodurch der Wärmetransport in Richtung zur Achse 18 verringert wird.

Fig. 7 zeigt eine mögliche Regelung des Elektromagneten 12. Einer Regelung 36 sind hierzu als Eingangsgrößen eine Drehzahl 30, eine Isttemperatur 32 und eine Solltemperatur 34 zugeführt. Die Regelung 36 gibt ein Spulenansteuersignal 35 an den Elektromagneten 12 ab.

Der Antrieb 17 in Fig. 8 gibt ein der Drehzahl 30 proportionales Signal an die Regelung 36 ab, der außerdem die Solltemperatur 34 zugeführt ist. Die Wirbelstromheizung 19 erwärmt einen im Wärmekreis 40 zirkulierenden Wärmeträger 41. Die Isttemperatur 32 des Wärmeträgers 41 ist abgegriffen und als Eingangsgröße der Regelung 36 zugeführt.

In Fig. 9 ist die Einbindung der Wirbelstromheizung 19 zur gezielten Erwärmung des Antriebs 17 dargestellt. Wiederum ist die Isttemperatur 32 des Wärmeträgers 41, der sich im Wärmekreis 40 befindet, der Regelung 36 zugeführt. Als antriebsspezifische Größen dienen die Drehzahl 30 und ein Lambda-Istwert 43 der Regelung 36 als Eingangsgrößen, ebenso wie ein Lambda-Sollwert 45. Die Regelung 36 gibt an die Wirbelstromheizung 19 das Spulenansteuersignal 35 ab.

Als Antrieb des bewegbaren Teils 10 ist der Verbrennungsmotor des Kraftfahrzeuges verwendet. Der Antrieb 17 bewegt entweder direkt oder über einen Riemen die Achse 18. Die Achse 18 versetzt das scheibenförmige bewegbare Teil 10 in Rotation. Das bewegbare Teil 10 besteht aus einem elektrisch/magnetisch leitfähigen Material; besonders vorteilhaft ist ein zwar besonders gut elektrisch leitfähiger, jedoch nicht magnetischer Werkstoff. Zum Einsatz kommen beispielsweise Eisen, Kupfer oder Aluminium. Der Durchmesser des als Scheibe ausgeführten bewegbaren Teils liegt in der Größenordnung von 12 cm.

Insbesondere bei hoher Geschwindigkeit (größer 10 m/s) des bewegbaren Teils 10 kann die Verwendung eines Materials mit mittlerer Leitfähigkeit wie beispielsweise Aluminium vorteilhaft sein. Denn es bilden sich geringere Ströme aus, die das Eindringen des Magnetfeldes in das bewegte Teil verhindern. Dadurch läßt sich die Erzeugung von Verlustleistung optimieren. Zudem ist das geringe Gewicht von Aluminium für die Anwendung im Kraftfahrzeug besonders vorteilhaft.

Der Elektromagnet 12 ist gegenüber dem bewegbaren Teil 10 feststehend angeordnet. Existiert ein Magnetfeld und bewegt sich das Teil 10 relativ zu dem Magnetfeld, werden auf dem rotierenden Teil 10 Wirbelströme induziert, die direkt das Teil 10 erwärmen. Wirbelströme erzeugen ein die Achse 18 bremsendes Moment. Der Wärmeträger 41 führt die so entstandene Wärme über den Wärmekreis 40 ab, um gezielt entweder den Fahrgastraum oder den Antrieb 17 des Fahrzeugs zu beheizen. Als Wärmeträger 41 kommt bevorzugt Wasser zum Einsatz, grundsätzlich denkbar wäre jedoch auch Luft. Bei dem Ausführungsbeispiel gemäß Fig. 3 ist die dem Elektromagneten 12 zugewandte erste Schicht 21 aus einem elektrisch besonders gut leitendem Material wie beispielsweise Kupfer aufgebaut. Dadurch läßt sich die Heizleistung wegen des niedrigeren elektrischen Widerstandes und des damit verbundenen höheren Stroms bei gleicher magnetischer Durchflutung erhöhen. Denn die induzierte Spannung in dem Teil 10 ist widerstands- und stromunabhängig und wird nur von der magnetischen Durchflutung und der Geschwindigkeit des Teils 10 bestimmt. Als zweite Schicht 22 geringerer Leitfähigkeit ist beispielsweise Eisen verwendet, welches den magnetischen Widerstand des Kreises reduziert.

Um die mechanische Festigkeit und die Heizleistung der Anordnung weiter zu erhöhen, werden gemäß den Ausführungsbeispielen von Fig. 4 und 5 jeweils zwei Elektromagnete 12 verwendet, die jeweils so gegeneinander versetzt angeordnet sind, daß sich die auf das Teil 10 ausgeübten Kräfte in ihrer Resultierenden aufheben. Bei einem kreisförmigen Teil 10 bedeutet dies, daß die beiden Elektromagneten 12 punktsymmetrisch bezüglich der Drehachse zueinander angeordnet sein müssen. Dadurch werden einseitige Belastungsfälle vermieden.

Um zu verhindern, daß die auf dem bewegbaren Teil 10 vorhandene Wärme zu einem großen Teil über die Achse 18 abgeführt wird, sind die zweiten Durchbrüche 25 in Achsnähe vorgesehen. Sie dienen als Wärmefallen und unterbinden den Wärmetransport zur Achse 18. Durch eine Materialkombination aus einem schlecht wärmeleitfähigen Material 46 in Achsnähe und einem elektrisch gut leitfähigen Material im Magnetbereich wird bei guter Wärmeerzeugung der direkte Wärmetransport zur Achse 18 minimiert. Bei dem Ausführungsbeispiel gemäß Fig. 6 sind noch weitere erste Durchbrüche 24 angebracht. Diese so entstehenden Inhomogenitäten des bewegbaren Teils 10 bewirken eine Veränderung des Magnetfelds, die zum Zwecke der Drehzahlerfassung des bewegbaren Teils 10 ausgewertet werden können. Um bei einem Riemenantrieb der Achse 18 Schlupf zu vermeiden, ist neben der Drehzahl des Antriebs 17 die so ermittelte Drehzahl des Teils 10 notwendig, mit deren Hilfe eine schlupfmindernde Antriebsregelung realisiert werden kann. Dem gleichen Zweck dienen auch gezielte Materialverstärkungen auf dem Teil 10.

Für die Regelung 36 der Temperatur des Wärmeträgers 41 sind als Eingangsgrößen die Drehzahl 30, die Isttemperatur 32 des Wärmeträgers 41 sowie die Solltemperatur 34 der Regelung 36 zugeführt. Die Heizleistung ist proportional zur Geschwindigkeit des Teils 10 und zu dem Magnetfeld. Aus dieser Beziehung läßt sich bei gegebener Drehzahl 30 des Teils 10 das Magnetfeld über den Strom einstellen, der die Spule 13 durchfließt. Alternativ läßt sich auch die an der Spule 13 abfallende Spannung gezielt vorgeben. Der Antrieb 17 liefert eine Information, die der Drehzahl 30 des Teils 10 proportional ist. Ein Temperaturfühler greift die Isttemperatur 32 des Wärmeträgers 41 am Wärmekreis 40 ab. Als weitere Einflußgrößen könnte die Regelung 36 beispielsweise auch die Batteriespannung berücksichtigen. Über einen nicht dargestellten Wärmetauscher wird in Verbindung mit dem Wärmekreis 40 die dem Fahrgastraum zuzuführende Luft entsprechend der vom Benutzer einstellbaren Solltemperatur 34 erwärmt. Vorteilhaft erfolgt die Regelung der Heizleistung linear zu den vorgebbaren Eingangsdaten, die beispielsweise analog eingestellt werden.

In einem weiteren Ausführungsbeispiel gemäß Fig. 9 dient die Wirbelstromheizung 19 der gezielten Beheizung des Antriebs 17. Hierzu ist der Wärmekreis 40 in räumlicher Nähe zum Antrieb 17 angeordnet, so daß er gezielt den Antrieb 17 erwärmen kann. Bei dem Konzept der sogenannten Kennfeld-Kühlung soll der Antrieb 17 möglichst unabhängig von Lastzuständen auf einem gleichmäßigen Temperaturniveau gehalten werden, beispielsweise auch dann, wenn der Antrieb 17 im Schubbetrieb gefahren wird. Ein bestimmtes Temperaturniveau des Antriebs 17 soll sich in Abhängigkeit von einem gewünschten Lambda-Sollwert 45 einstellen, der der Regelung 36 neben dem Lambda-Istwert 34 zusätzlich als Eingangsgröße dient. Die Regelung 36 erhält hierzu entsprechende Steuersignale von einer Steuerung des Antriebs 17, in der entsprechende Kennlinienfelder hinterlegt sind, die den Zusammenhang zwischen Lambdawert, Antriebsbelastung und Antriebstemperaturniveau beschreiben.

Weitere alternative AüsgeStaitimgen sind denkbar. Als Antrieb 17 könnte beispielsweise auch die Wasserpumpe oder die Achse eines Kühlkompressors verwendet werden. Ist das bewegbare Teil 10 konstruktiv mit Schaufeln oder Flügeln ausgestaltet und von Wasser als Wärmeträger 41 umströmt, könnte das bewegbare Teil direkt über die Umwälzung des Wärmeträgers 41 angetrieben werden.

Weiterhin ist es auch möglich, daß das bewegbare Teil 10 selbst die Funktion der Wasserpumpe übernimmt und den Wärmeträger 41 umwälzt.

In einer weiteren Alternative ist die Wirbelstromheizung 19 auch mit Betätigen der Fahrzeugbremse zu aktivieren. Somit wird der Antrieb 17 mit einem zusätzlichen Bremsmoment beaufschlagt.

## Patentansprüche

1. Vorrichtung zum Beheizen eines Kraftfahrzeugs mit einem von einem Antrieb (17) über eine Achse (18) bewegbaren Teil (10), mit zumindest einem Elektromagneten (12), der in der Nähe des bewegbaren Teils (10) in der Weise angeordnet ist, dass eine Relativbewegung des bewegbaren Teils (10) gegenüber dem Elektromagneten (12) zu einer Induzierung eines Wirbelstroms in dem Teil (10) führt und die dabei entstehende Wärme von einem Wärmeträger abgeführt und einer zu beheizenden Einheit des Kraftfahrzeugs zugeführt ist, wobei das bewegbare Teil (10) scheibenförmig ausgebildet ist, **dadurch gekennzeichnet, dass** eine Regelung (36) für das Magnetfeld des Elektromagneten (12) vorgesehen ist und die Regelung (36) des Elektromagneten (12) von der Drehzahl (30) des bewegbaren Teils (10) und von einem Temperatursollwert sowie von einem Temperaturistwert des Wärmeträgers abhängt.

2. Vorrichtung nach Anspruch 1, **dadurch gekennzeichnet, daß** das bewegbare Teil (10) kreisförmig ausgebildet ist und dessen Ende von dem Elektromagneten (12) umschlossen ist.

3. Vorrichtung nach einem der vorhergehenden Ansprüche, **dadurch gekennzeichnet, daß** das bewegbare Teil (10) als Zylinder ausgebildet ist, wobei in Drehachsrichtung des Zylinders eine Erhöhung vorgesehen ist.

4. Vorrichtung nach einem der vorhergehenden Ansprüche, **dadurch gekennzeichnet, daß** die Erhöhung von dem Elektromagneten (12) umschlossen ist.

5. Vorrichtung nach einem der vorhergehenden Ansprüche, **dadurch gekennzeichnet, daß** zumindest zwei Elektromagnete (12) vorgesehen sind, die vorzugsweise so zueinander angeordnet sind, daß sich sie resultierenden Kräfte der Elektromagnete (12) auf das Teil (10) aufheben.

6. Vorrichtung nach einem der vorhergehenden Ansprüche, **dadurch gekennzeichnet, daß** das bewegbare Teil (10) aus einer ersten Schicht (21) und aus einer zweiten Schicht (22) aufgebaut ist, wobei die erste Schicht (21) aus einem elektrisch leitfähigen Material besteht, das gegenüber dem elektrisch leitfähigen Material der zweiten Schicht (22) einen geringeren elektrischen Widerstand aufweist.

7. Vorrichtung nach einem der vorhergehenden Ansprüche, **dadurch gekennzeichnet, daß** in dem bewegbaren Teil (10) Durchbrüche (24, 25) vorgesehen sind, um die Wärmeleitung in Richtung der Achse (18) zu erschweren oder um die Drehzahl (30) des bewegbaren Teils (10) zu erfassen.

8. Vorrichtung nach einem der vorhergehenden Ansprüche, **dadurch gekennzeichnet, daß** das bewegbare Teil (10) im Bereich der Durchbrüche (25) aus einem zweiten, schlecht wärmeleitfähigen Material besteht, um die Wärmeleitung in Richtung Achse (18) zu erschweren.

9. Vorrichtung nach einem der vorhergehenden Ansprüche, **dadurch gekennzeichnet, daß** die entstehende Wärme von einem Wärmeträger (41) in einem Wärmekreis (40) abgeführt wird zur Beheizung des Kraftfahrzeuginnenraums.

10. Vorrichtung nach einem der vorhergehenden Ansprüche, **dadurch gekennzeichnet, daß** die entstehende Wärme zur Beheizung des Antriebs (17) abgeführt wird.

11. Vorrichtung nach einem der vorhergehenden Ansprüche, **dadurch gekennzeichnet, daß** die Regelung (36) in Abhängigkeit von dem Lambda-Wert des Antriebs (17) erfolgt.

12. Vorrichtung nach einem der vorhergehenden Ansprüche, **dadurch gekennzeichnet, daß** das bewegbare Teil (10) Mittel aufweist, um den Wärmeträger (41) im Wärmekreis (40) umzuwälzen.

13. Vorrichtung nach einem der vorhergehenden Ansprüche, **dadurch gekennzeichnet, daß** der Wärmeträger (41) das Teil (10) bewegt.

14. Vorrichtung nach einem der vorhergehenden Ansprüche, **dadurch gekennzeichnet, daß** der Antrieb (17) des Kraftfahrzeugs das Teil (10) bewegt.

15. Vorrichtung nach einem der vorhergehenden Ansprüche, **dadurch gekennzeichnet, daß** das bewegbare Teil (10) aus einem nichtmagnetischen, jedoch elektrisch leitfähigem Material besteht.

16. Vorrichtung nach einem der vorhergehenden Ansprüche, **dadurch gekennzeichnet, daß** das bewegbare Teil (10) aus Aluminium besteht.

## Claims

1. Device for heating a motor vehicle, having a part (10) which can be moved by a drive (17) via a shaft (18), having at least one electromagnet (12), which is arranged in the vicinity of the moveable part (10), in such a manner that a relative movement of the moveable part (10) with respect to the electromagnet (12) induces an eddy current in the part (10), and the heat which is thereby generated is carried away by a heat-transfer medium and fed to a unit of the motor vehicle that is to be heated, the moveable part (10) being disc-like in form, **characterized in that** there is a controller (36) for controlling the magnetic field of the electromagnet (12), and the controller (36) of the electromagnet (12) is dependent on the rotational speed (30) of the moveable part (10) and on a desired temperature value and an actual temperature value of the heat-transfer medium.

2. Device according to Claim 1, **characterized in that** the moveable part (10) is circular in form and its end is surrounded by the electromagnet (12).

3. Device according to one of the preceding claims, **characterized in that** the moveable part (10) is designed as a cylinder, with an elevation being provided in the direction of the axis of rotation of the cylinder.

4. Device according to one of the preceding claims, **characterized in that** the elevation is surrounded by the electromagnet (12).

5. Device according to one of the preceding claims, **characterized in that** at least two electromagnets (12) are provided, preferably arranged in such a way with respect to one another that the resulting forces of the electromagnets (12) on the part (10) cancel one another out.

6. Device according to one of the preceding claims, **characterized in that** the moveable part (10) is composed of a first layer (21) and a second layer (22), the first layer (21) consisting of an electrically conductive material which has a lower electrical resistance than the electrically conductive material of the second layer (22).

7. Device according to one of the preceding claims, **characterized in that** apertures (24, 25) are provided in the moveable part (10) in order to make the conduction of heat in the direction of the shaft (18) more difficult or to record the rotational speed (30) of the moveable part (10).

8. Device according to one of the preceding claims, **characterized in that** the moveable part (10), in the region of the apertures (25), consists of a second material, with a poor thermal conductivity, in order to make the conduction of heat in the direction of shaft (18) more difficult.

9. Device according to one of the preceding claims, **characterized in that** the heat which is generated is removed by a heat-transfer medium (41) in a heating circuit (40) and used to heat the interior compartment of the motor vehicle.

10. Device according to one of the preceding claims, **characterized in that** the heat which is generated is removed in order to heat the drive (17).

11. Device according to one of the preceding claims, **characterized in that** the controller (36) functions on the basis of the lambda value of the drive (17).

12. Device according to one of the preceding claims, **characterized in that** the moveable part (10) has means for circulating the heat-transfer medium (41) in the heating circuit (40).

13. Device according to one of the preceding claims, **characterized in that** the heat-transfer medium (41) moves the part (10).

14. Device according to one of the preceding claims, **characterized in that** the drive (17) of the motor vehicle moves the part (10).

15. Device according to one of the preceding claims, **characterized in that** the moveable part (10) consists of a nonmagnetic but electrically conductive material.

16. Device according to one of the preceding claims, **characterized in that** the moveable part (10) consists of aluminium.

## Revendications

1. Dispositif de chauffage d'un véhicule automobile comprenant
- une partie (10) pouvant être déplacée sur un axe (18) par un entraînement (17),
- au moins un électroaimant (12) disposé à proximité de la partie mobile (10) de telle sorte qu'un mouvement relatif de la partie mobile (10) par rapport à l'électroaimant (12) conduit à l'induction d'un tourbillon dans la partie (10) et la chaleur ainsi produite est évacuée par un fluide caloporteur et acheminée vers une unité du véhicule automobile devant être chauffée, la partie mobile (10) étant un disque,
**caractérisé en ce qu'**
il est prévu une régulation (36) pour le champ magnétique de l'électroaimant (12) et la régulation (36) de l'électroaimant (12) dépend de la vitesse de rotation (30) de la patrie mobile (10) ainsi que d'une valeur de consigne de température et d'une valeur réelle de température du fluide caloporteur.

2. Dispositif selon la revendication 1,
**caractérisé en ce que**
la partie mobile (10) est en forme de cercle et son extrémité est entourée par l'électroaimant (12).

3. Dispositif selon l'une des revendications précédentes,
**caractérisé en ce que**
la partie mobile (10) est un cylindre, une élévation étant prévue dans la direction de l'axe de rotation du cylindre.

4. Dispositif selon l'une des revendications précédentes,
**caractérisé en ce que**
l'élévation est entourée par l'électroaimant (12).

5. Dispositif selon l'une des revendications précédentes,
**caractérisé en ce qu'**
il est prévu au moins deux électroaimants (12) disposés de préférence l'un par rapport à l'autre de telle sorte que les forces résultantes des électroaimants (12) s'annulent sur la partie (10).

6. Dispositif selon l'une des revendications précédentes,
**caractérisé en ce que**
la partie mobile (10) se compose d'une première couche (21) et d'une deuxième couche (22), la première couche (21) étant constituée d'un matériau conducteur d'électricité présentant, par rapport au matériau conducteur d'électricité de la deuxième couche (22), une résistance électrique plus faible.

7. Dispositif selon l'une des revendications précédentes,
**caractérisé en ce que**
dans la partie mobile (10) sont prévus des passages (24, 25) afin de rendre plus difficile la conduction de la chaleur dans la direction de l'axe (18) ou d'enregistrer la vitesse de rotation (30) de la partie mobile (10).

8. Dispositif selon l'une des revendications précédentes,
**caractérisé en ce que**
la partie mobile (10) se compose, dans la zone des passages (25), d'un deuxième matériau peu conducteur de chaleur, afin de rendre plus difficile la conduction de la chaleur dans la direction de l'axe (18).

9. Dispositif selon l'une des revendications précédentes,
**caractérisé en ce que**
la chaleur produite par un fluide caloporteur (41) est évacuée dans un circuit de chaleur (40) pour chauffer l'habitacle.

10. Dispositif selon l'une des revendications précédentes,
**caractérisé en ce que**
la chaleur produite est évacuée pour chauffer l'entraînement (17).

11. Dispositif selon l'une des revendications précédentes,
**caractérisé en ce que**
la régulation (36) s'effectue en fonction de la valeur lambda de l'entraînement (17).

12. Dispositif selon l'une des revendications précédentes,
**caractérisé en ce que**
la partie mobile (10) présente des moyens permettant de renouveler le fluide caloporteur (41) dans le circuit de chaleur (40).

13. Dispositif selon l'une des revendications précédentes,
**caractérisé en ce que**
le fluide caloporteur (41) fait bouger la partie (10).

14. Dispositif selon l'une des revendications précédentes,
**caractérisé en ce que**
l'entraînement (17) du véhicule automobile fait bouger la partie (10).

15. Dispositif selon l'une des revendications précédentes,
**caractérisé en ce que**
la partie mobile (10) se compose d'un matériau non magnétique, mais conducteur d'électricité.

16. Dispositif selon l'une des revendications précédentes,
**caractérisé en ce que** la partie mobile (10) est en aluminium.
